# EUROPÄISCHE PATENTANMELDUNG

(11) **EP 4 380 307 A1**
(43) Veröffentlichungstag der Anmeldung: **05.06.2024**
(21) Anmeldenummer: 23204519.5
(22) Anmeldetag: 19.10.2023
(51) Int. Cl.: H05B 3/34, B29C 43/18, B29C 45/14, B60N 2/56

(54) **VERFAHREN ZUR HERSTELLUNG EINES INTERIEURBAUTEILS FÜR EIN FAHRZEUG**

(30) Priorität: 15.11.2022 DE 102022130108
(71) Anmelder: Lisa Dräxlmaier GmbH, 84137 Vilsbiburg (DE)
(72) Erfinder: Gschaider, Wolfgang, 84100 Niederaichbach (DE); Hubauer, Franz, 84175 Schalkham (DE)

(57) **Zusammenfassung**

Verfahrensschritten: Bereitstellen einer Fasermatte (2) und Einbringen eines Durchgangs (3) in die Fasermatte (2), Erzeugen einer Verbundmatte (7) durch Aufbringen eines Heizelements (4) auf eine erste Oberfläche (10) der Fasermatte (2), wobei ein elektrisches Leiterelement (6) des Heizelements (4) durch den Durchgang (3) hindurchgeführt wird, Umformen der Verbundmatte (7), und Aufbringen einer Dekorschicht (8) auf die umgeformte Verbundmatte (7).

## Beschreibung

### Technisches Gebiet

Die vorliegende Erfindung betrifft ein Herstellungsverfahren für ein Interieurbauteil für ein Fahrzeug, wobei das Interieurbauteil vorzugsweise dazu geeignet ist, einen Fahrzeuginnenraum zu beheizen. Zur Herstellung des Interieurbauteils wird ein Heizelement mit einer Naturfasermatte verbunden. Die dadurch erzeugte Verbundmatte wird anschließend umgeformt.

### Stand der Technik

Aus dem Stand der Technik sind beheizbare Interieurbauteile für Fahrzeuge bekannt, die im Betrieb oder während der Nutzung des Fahrzeugs in unmittelbaren Kontakt mit dem Fahrer bzw. dem Fahrgast stehen. Hierunter fallen beispielsweise Sitzheizungen. Bei den bekannten beheizbaren Interieurbauteilen wird ein Heizelement zwischen einem nachgiebigen Grundkörper, beispielsweise einem Schaumstoffkern, und einer Verkleidung, beispielsweise einem Sitzbezug, angeordnet. Aufgrund der Nachgiebigkeit des Grundkörpers kann das Heizelement bei der Herstellung eines solch beheizbaren Interieurbauteils einfach auf den Grundkörper aufgelegt werden, ohne dass die Gefahr besteht, dass das Heizelement oder eine mit dem Heizelement verbundene Leitungen beim Verkleiden und/oder im Rahmen der Nutzung geknickt und dadurch beschädigt wird.

Andere Interieurbauteile, beispielsweise Armaturen oder Innenraumverkleidungen weisen in der Regel keinen nachgiebigen Grundkörper auf. Vielmehr wird hier ein harter, unverformbarer, also ein nicht nachgiebiger, Grundkörper verwendet. Fertigt man derart formstabile Interieurbauteile mittels der bekannten Herstellungsverfahren, besteht die Gefahr, dass das Heizelement und/oder ein Leiterelemente zur elektrischen Kopplung des Heizelements mit einer Stromquelle beim Verkleiden und/oder im Rahmen der Nutzung an den Kanten des Grundkörpers abknickt und beschädigt wird. Dies führt zu einer hohen Ausschussrate und in der Folge auch zu einem hohen Herstellungsaufwand mit hohen Herstellungskosten.

Eine aus dem Stand der Technik bekannte Lösung besteht darin, einen weichen Grundkörper zu verwenden, der dann gemeinsam mit dem Heizelement verfestigt wird. Bei derartigen Lösungen besteht allerdings das Problem, dass das elektrische Leiterelemente dann seitlich aus dem verfestigten Verbund herausragen und immer noch an den scharfen Kanten des Grundkörpers abknicken bzw. beschädigt werden kann.

### Beschreibung der Erfindung

Ausgehend von dem oben aufgeführten Stand der Technik ist es eine Aufgabe der vorliegenden Erfindung, ein Herstellungsverfahren für ein Interieurbauteil anzugeben, welches die oben genannten Probleme und Nachteile des Standes der Technik ausräumt. Insbesondere ist es eine Aufgabe der vorliegenden Erfindung, ein verbessertes Verfahren anzugeben, mit dem ein formstabiles und beheizbares Interieurbauteil für ein Fahrzeug hergestellt werden kann, dass bei geringem Herstellungsaufwand eine verbesserte Qualität aufweist.

Diese Aufgabe wird mit einem Verfahren zur Herstellung eines Interieurbauteils gemäß Anspruch 1 gelöst. Vorteilhafte Weiterbildungen der Erfindung sind Gegenstand der abhängigen Ansprüche und/oder werden in der nachfolgenden Beschreibung erläutert.

Die erfindungsgemäße Lösung besteht darin, dass das Verfahren zur Herstellung des Interieurbauteils für ein Fahrzeug folgende Verfahrensschritte aufweist. Zu Beginn wird eine Fasermatte bereitgestellt und mit einem Durchgang versehen. Der Durchgang erstreckt sich vorzugsweise durch die Fasermatte hindurch. Beispielsweise kann die Fasermatte mit einem Messer abschnittsweise durchtrennt werden. Alternativ kann die Fasermatte gestanzt werden. Der Schnitt bzw. der ausgestanzte Teil der Fasermatte bildet dann den Durchgang.

In einem weiteren Verfahrensschritt wird erfindungsgemäß eine Verbundmatte erzeugt. Um die Verbundmatte zu erzeugen, wird ein Heizelement auf eine erste Oberfläche der Fasermatte aufgebracht. Das Heizelement kann eine elektrische Flächenheizung sein. Vorzugsweise ist das Heizelement eine Vlies-Litzenheizung, eine Wärmfolie, und/oder ein Heizgewebe. Das Heizelement kann eine oder mehrere Heizlitzen umfassen. Das Heizelement weist vorteilhafterweise eine möglichst flache Bauform auf. Vom vorgenannten unabhängig kann das Heizelement eine oder mehrere elektrische Heizschleifen aufweisen. Eine elektrische Heizschleife ist vorzugsweise dazu ausgebildet, Wärme zu erzeugen und an die Umgebung abzugeben, wenn die elektrische Heizschleife mit Strom versorgt wird.

Zum Aufbringen kann das Heizelement auf die Fasermatte aufgelegt werden, auf die Fasermatte geklebt werden und/oder in anderer Art und Weise mit der Fasermatte, insbesondere der ersten Oberfläche der Fasermatte, in Kontakt gebracht werden. Beispielsweise kann das Heizelement mittels einer selbstklebenden Folie und/oder mittels beidseitig klebenden Klebeband auf die Fasermatte aufgeklebt werden. Das Heizelement und die Fasermatte bilden dann gemeinsam eine Verbundmatte.

Vor, während und/oder nach dem Aufbringen des Heizelements auf die Fasermatte wird ein Leiterelement des Heizelements durch den Durchgang hindurchgeführt. Das Leiterelement ist vorzugsweise zur Steuerung und/oder Stromversorgung der elektrischen Heizschleife ausgebildet. Das Leiterelement kann beispielsweise zwei oder mehr als zwei elektrische Verbindungskabel aufweisen, über welche die Heizschleife mit einer externen Stromversorgung, insbesondere dem Stromnetz des Fahrzeugs, elektrisch verbindbar ist.

Anschließend wird die Verbundmatte umgeformt. Unter dem Begriff "Umformen" wird im Sinne dieser Erfindung ein Verfahrensschritt verstanden, bei dem die Form der Verbundmatte geändert wird. Beispielsweise kann während des Umformens die Dicke der Verbundmatte reduziert werden und/oder die Verbundmatte mit einer vordefinierten Kontur versehen werden. Während des Umformens kann die Verbundmatte verfestigt bzw. versteift werden. Dies kann beispielsweise durch Komprimieren, insbesondere durch Verpressen, der Verbundmatte realisiert werden. Alternativ oder zusätzlich kann die Verbundmatte vor, während und/oder nach dem Umformen zugeschnitten werden. Beim Zuschneiden der Verbundmatte kann vorzugsweise ein Teilabschnitt der Verbundmatte aus der Verbundmatte ausgestanzt werden.

Das erfindungsgemäßen Herstellungsverfahren bewirkt vorteilhafterweise, dass das Interieurbauteil mit nur wenigen Herstellungsmaterialen und wenigen Herstellungsschritten hergestellt werden kann. Gleichzeitig wird durch das Verlegen des Leiterelements durch die Fasermatte hindurch vermieden, dass das Leiterelement seitlich aus dem Interieurbauteil herausgeführt werden muss. Dies hat den Vorteil, dass der Herstellungsaufwand und die Herstellungskosten beim erfindungsgemäßen Herstellungsverfahren zumindest gleichbleiben. Dem gegenüber kann die Haltbarkeit und insofern auch die Qualität des erfindungsgemäß hergestellten Interieurbauteils gesteigert werden.

Das durch das erfindungsgemäße Verfahren hergestellte Erzeugnis kann dementsprechend ein Interieurbauteil mit einer Schicht aus einer umgeformten, vorzugsweise komprimierten, Fasermatte, und einem Heizelement, wobei sich ein Leiterelement des Heizelements durch die Fasermatte hindurch erstreckt.

Bei einer beispielhaften Ausführungsform des Herstellungsverfahrens wird das Leiterelement derart durch den Durchgang hindurchgeführt, dass das Leiterelement zumindest abschnittsweise aus einer zweiten Oberfläche der Fasermatte herausragt. Die zweite Oberfläche der Fasermatte ist insbesondere eine der ersten Oberfläche gegenüberliegende und/oder eine von der ersten Oberfläche abgewandte Oberfläche der Fasermatte. Die erste Oberfläche der Fasermatte bildet vorzugswiese auch die erste Oberfläche der Verbundmatte. Die zweite Oberfläche der Fasermatte bildet vorzugswiese auch die zweite Oberfläche der Verbundmatte.

Ein derartiges Hindurchführen des Leiterelements durch den Durchgang bewirkt vorteilhafterweise, dass die elektrische Heizschleife des Heizelements auf einer dem Fahrzeuginsassen zugewandten Seite des Interbauteils angeordnet werden kann. Dadurch kann die von der Heizschleife erzeugte Wärme besonders gut an den Fahrzeuginnenraum und/oder den Fahrzeuginsassen abgeben werden. Andererseits kann die elektrische Stromversorgung über die vom Fahrzeuginnenraum und/oder Fahrzeuginsassen abgewandte Seite des Interbauteils realisiert werden. Die vom Fahrzeuginnenraum und/oder Fahrzeuginsassen abgewandte Seite des Interbauteils wird demnach vorzugsweise durch die zweite Oberfläche gebildet.

Bei einer beispielhaften Weiterbildung der vorgenannten Ausführungsform wird an das zumindest abschnittsweise aus der zweiten Oberfläche herausragende Leiterelement ein Stecker angeformt. Beispielsweise kann der Stecker zumindest abschnittsweise eine formstabile Ummantelung der zumindest abschnittsweise aus der zweiten Oberfläche herausragenden Verbindungskabel des Leiterelements bilden. Der Stecker kann einen oder mehrere Steckerpins aufweisen. Vorzugsweise bildet jeweils ein nicht isolierter Abschnitt eines Verbindungskabels des Leiterelements einen Steckerpin des Steckers. Der Verfahrensschritt des Anformens des Steckers kann vor, während und/oder nach dem Umformen der Verbundmatte erfolgen. Bevorzugt wird der Stecker an die zweiten Oberfläche der Verbundmatte bzw. an die zweite Oberfläche der Fasermatte angespritzt.

Das Anformen des Steckers bewirkt vorteilhafterweise, dass das fertige Interieurbauteil besonders einfach elektrisch kontaktiert werden kann, insbesondere über die zweite Oberfläche besonders einfach elektrisch kontaktiert werden kann, wenn das Interieurbauteil in ein Fahrzeug verbaut wird. Darüber hinaus stabilisiert der Stecker das zumindest abschnittsweise aus der zweiten Oberfläche herausragende Leiterelement. Dies hat den Vorteil, dass die Qualität und insbesondere die Haltbarkeit des Interieurbauteils weiter erhöht werden kann.

Bei einer vorteilhaften Weiterbildung wird die Verbundmatte beim Umformen mittels Aufbringen einer Druckkraft durch ein Umformwerkzeug zusammengepresst. Bevorzugt bleibt das Leiterelement auch nach dem Umformen zumindest abschnittsweise frei zugänglich. Mit anderen Worten bleibt der aus der zweiten Oberfläche der Fasermatte herausragende Teil des Leiterelements auch nach dem Umformen elektrisch kontaktierebar. Dies hat den Vorteil, dass das so hergestellte Interieurbauteil später sehr einfach in ein Fahrzeug integriert werden kann, ohne das optische oder funktionelle Einschränkungen auftreten.

Vorzugsweise wird der Durchgang durch das Umformen verschlossen. Beispielsweise kann die Fasermatte während des Umformens im Bereich des Durchgangs derart an das Leiterelement gepresst werden, dass sich die Fasermatte nach dem Umformen an das Leiterelement anschmiegt. Dies bewirkt vorteilhafterweise, dass zumindest der Abschnitt des Leiterelements im Durchgang nach dem Umformen formstabil in die Verbundmatte eingelassen ist. Dies hat den Vorteil, dass das Interieurbauteil eine besonders hochwertige und langlebige Qualität aufweist.

Bei einer beispielhaften Weiterbildung weist das Heizelement einen Temperatursensor auf. Bei dem Temperatursensor kann es sich um einen elektrischen Thermistor, insbesondere um einen NTC-Thermistor, handeln. Ein Heizelement mit einem Temperatursensor hat den Vorteil, dass das Heizelement im Betrieb besser geregelt werden kann und/oder eine Überhitzung des Heizelements verhindert werden kann.

Bei einer weiteren beispielhaften Ausführungsform des Herstellungsverfahrens wird die Verbundmatte durch das Umformen komprimiert und verfestigt.

Vorzugsweise wird die umgeformte Verbundmatte mit einer Dekorschicht kaschiert. Die Dekorschicht kann insbesondere auf eine Oberfläche der umgeformten Verbundmatte aufgebracht werden. Vorzugsweise ist die Dekorschicht dem Fahrzeuginnensassen bzw. dem Fahrzeuginnenraum zugewandt, wenn das Interieurbauteil in einem Fahrzeug verbaut wird.

Die Dekorschicht kann auf die erste Oberfläche der Verbundmatte, insbesondere auf die erste Oberfläche der komprimierten und verfestigten Verbundmatte, aufgebracht werden. Dadurch wird die erste Oberfläche kaschiert. Dies bewirkt vorteilhafterweise, dass auch das Heizelement, insbesondere die Heizschleife des Heizelements, kaschiert wird. Die Dekorschicht kann beispielsweise derart auf die Verbundmatte aufgebracht werden, dass das Heizelement zumindest abschnittsweise zwischen der Dekorschicht und der Fasermatte angeordnet ist. Vorzugsweise wird die Dekorschicht derart auf die Verbundmatte aufgebracht, dass das Heizelement vollständig zwischen der Dekorschicht und der Fasermatte angeordnet ist.

Die mit der Dekorschicht kaschierte erste Oberfläche ist bei dem fertiggestellten Interieurbauteil vorzugsweise die Oberfläche bzw. die Seite des Interieurbauteils, die dem Fahrzeuginnenraum und/oder dem Fahrzeuginnensassen zugewandt ist, wenn das Interieurbauteil in einem Fahrzeug verbaut wird. Das Herstellungsverfahren, bei dem die Dekorschicht auf die erste Oberfläche aufgebracht wird, ist kostengünstig und stellt eine qualitativ hochwertige Optik des fertig hergestellten Interieurbauteils sicher.

Die Dekorschicht kann eine Lacksicht, insbesondere eine Klarlackschicht oder ein Dekormittel, beispielsweise einen Aufdruck aufweisen. Alternativ oder zusätzlich kann die Dekorschicht Leder, Kunstleder, Alcantara, Textil, eine Planware mit thermoplastischen Polyolefinen und/oder eine Sprühhaut umfassen.

Die Fasermatte kann ein Material aufweisen und/oder aus einem Material bestehen, dass Naturfasern, Polyester, Glasfasern, Biopolymerfaser und/oder Polymerfasern umfasst. Die Fasermatte ist vorzugsweise eine Kompositmatte, die Naturfasern und Kunststofffasern aufweist. Die Naturfasern können beispielsweise Hanf-, Flachs- und/oder Kenaffasern umfassen. Auch abbaubare Biopolymere sind in der Verwendung als Naturfasern und/oder Kunststofffasern denkbar. Die Kunststofffasern können Fasern aus Kunststoffpolymeren, insbesondere Polypropylen, und/oder Biopolymeren, insbesondere Polylactide, sein. Der Gewichtsanteil der Naturfasern kann 30% bis 70%, vorzugsweise 40% bis 60% und besonders bevorzugt 50% betragen. Der Gewichtsanteil der Kunststofffasern kann 70% bis 30%, vorzugsweise 60% bis 40%, und besonders bevorzugt 50% betragen. Eine Kompositmatte ist vorteilhafterweise besonders nachhaltig und umweltfreundlich. Alternativ kann die Fasermatte aber auch eine Polyestermatte, eine Glasfasermatte oder ein eigenverstärktes System aus beispielsweise 100% Kunststoffpolymeren oder 100% Biopolymeren sein.

Bei einer weiteren beispielhaften Ausführungsform des Herstellungsverfahrens wird die Verbundmatte zum Umformen in ein Umformwerkzeug eingebracht. Anschließend kann die Verbundmatte unter Aufbringen einer Druckkraft zusammengepresst werden. Vorteilhafterweise wird die Verbundmatte beim Umformen kaltverformt. Beispielsweise kann die Verbundmatte beim Umformen durch eine Presse umgeformt werden. Das Umformwerkzeug weist vorzugsweise im Bereich des Leiterelements an der zweiten Oberfläche der Verbundmatte eine Ausnehmung auf. Dadurch wird verhindert, dass das das Leiterelement beim Umformen beschädigt wird und/oder in die Fasermatte eingepresst wird. Durch das Umformen kann die Verbundmatte in eine vordefinierte Form gebracht werden, insbesondere in die Form des Interieurbauteils gebracht werden. Beim Umformen kann die Verbundmatte auch versteift bzw. verfestigt werden.

Das Umformen mittels eines Umformwerkzeugs bewirkt vorteilhafterweise, dass das Interieurbauteil besonders einfach aus der Verbundmatte hergestellt werden kann. Darüber hinaus werden keine zusätzlichen Heiß- und/oder Kaltpressen benötigt, was wiederum zur Reduzierung der Herstellungskosten führt.

Davon unabhängig kann die Verbundmatte vor dem Umformen vorkomprimiert werden. Das Vorkomprimieren bewirkt vorteilhafterweise, dass das Heizelement, insbesondere die elektrische Heizschleife des Heizelements, in die Fasermatte eingedrückt wird. Davon unabhängig kann die Verbundmatte beim Vorkomprimieren auf eine vordefinierte Dicke komprimiert werden. Das Vorkomprimieren erfolgt beispielsweise mittels einer Kontaktheißpresse. Um die vordefinierte Dicke zu erreichen, kann beim Vorkomprimieren die Temperatur, die Kompressionsdauer und/oder die Anpresskraft entsprechend variiert werden. Beispielsweise wird die Verbundmatte beim Vorkomprimieren unter Aufbringen von Druck und Temperatur für eine bestimmte Zeit zusammengepresst, so dass sich die Dichte der Verbundmatte, insbesondere die Dicke der Fasermatte, erhöht und/oder die Dicke der Verbundmatte reduziert. Die beim Vorkomprimieren genutzten Temperaturen liegen vorzugsweise deutlich über den Temperaturen, die beim anschließenden Umformen verwendet werden.

Das Vorkomprimieren bewirkt vorteilhafterweise, dass die Verbundmatte nach dem Vorkomprimieren eine standardisierte Dicke aufweist und daher besonders einfach weiterverarbeitet werden kann, vorzugsweise automatisiert weiterverarbeitet werden kann. Dies hat den Vorteil, dass die Herstellungskosten durch das vorgeschlagene Herstellungsverfahren weiter reduziert werden können.

Vor dem Umformen und/oder vor dem Vorkomprimieren kann eine zweite Fasermatte auf die Verbundmatte aufgebracht werden. Vorzugsweise wird die zweite Fasermatte auf die erste Oberfläche der Verbundmatte aufgebracht. Die zweite Fasermatte kann so auf die Verbundmatte aufgebracht werden, dass das Heizelement, insbesondere die elektrische Heizschleife des Heizelements, zumindest abschnittsweise zwischen der Verbundmatte und der zweiten Fasermatte angeordnet ist. Vorzugsweise wird die zweite Fasermatte so auf die Verbundmatte aufgebracht, dass die elektrische Heizschleife des Heizelements vollständig zwischen der Verbundmatte und der zweiten Fasermatte angeordnet ist. Beim fertig hergestellten Interieurbauteil kann das Heizelement, insbesondere die elektrische Heizschleife, dann gemeinsam mit den Fasermatten eine Art Sandwichstruktur bilden. Das Herstellungsverfahren, bei dem eine zweite Fasermatte verwendet wird, hat den Vorteil, dass das Heizelement bei dem fertigen Interieurbauteil strukturell besonders gut in das Interieurbauteil eingelassen ist.

Bei einer weiteren beispielhaften Ausführungsform des Herstellungsverfahrens kann die Verbundmatte mit einer Folie verpresst werden. Die Folie kann insbesondere eine Kunststofffolie und/oder eine Biokunststofffolie sein. Vorzugsweise wird die Folie auf die erste Oberfläche und/oder die zweite Oberfläche der Verbundmatte gepresst. Das Verpressen mit der Folie kann vor, während oder nach dem Umformen erfolgen. Vorzugsweise erfolgt das Verpressen mit der Folie nach dem Vorkomprimieren und während des Umformens. Das Aufbringen von Folie auf die Verbundmatte hat den Vorteil, dass dadurch eine besonders glatte, optisch ansprechende und insofern qualitativ hochwertige Oberfläche bereitgestellt werden kann.

Zusätzlich oder alternativ kann die Verbundmatte während und/oder nach dem Umformen mit Kunststoff hinterspritzt werden. Der Kunststoff kann beispielsweise flächig oder rippenförmig auf die Verbundmatte aufgespritzt werden. Vorzugsweise wird der Kunststoff auf die zweite Oberfläche der Verbundmatte aufgespritzt. Das Hinterspritzen bzw. Aufspritzen des Kunststoffs wird insbesondere derart ausgeführt, dass das Leiterelement elektrisch kontaktierbar bleibt. Der optionale Verfahrensschritt das Aufbringens von Kunststoff bewirkt vorteilhafterweise, dass die Verbundmatte durch den Kunststoff weiter versteift wird. Dementsprechend kann ein so hergestelltes Interieurbauteil stabiler ausgebildet sein.

Das durch eines der vorgenannten Herstellungsverfahren hergestellte Interieurbauteil kann eine Interieurbauteil zur Verwendung in und/oder an einem Fahrzeug sein. Bei dem Fahrzeug kann es sich beispielsweise um ein Landfahrzeug, ein Luftfahrzeug und/oder ein Wasserfahrzeug handeln. Vorzugsweise ist das Interieurbauteil zur Verwendung in einem Landfahrzeug, insbesondere in einem Kraftfahrzeug, wie beispielsweise einem Personenkraftwagen und/oder einem Lastkraftwagen, geeignet. Das Interieurbauteil kann beispielsweise ein Bestandteil einer Mittelarmkonsole, einer Armlehne, einer Türinnenverkleidung, einer Handschuhfachkonsole, eines Innenraumverkleidungsteils und/oder eines Armaturenbretts in einem Fahrzeug sein.

### Kurze Beschreibung der Zeichnungen

Die oben beschriebenen, unterschiedlichen und beispielhaften Merkmale können erfindungsgemäß miteinander kombiniert werden, soweit dies technisch sinnvoll und geeignet ist. Weitere Merkmale, Vorteile und Ausführungsformen der Erfindung ergeben sich aus der nachfolgenden Beschreibung, sowie den in den Figuren dargestellten Ausführungsbeispielen der verschiedenen Verfahrensschritte des Herstellungsverfahrens. Es zeigen:
- Fig. 1: einen ersten Verfahrensschritt gemäß eines Ausführungsbeispiels für ein Verfahren zur Herstellung eines Interieurbauteils;
- Fig. 2: eine Rückansicht einer Verbundmatte nach dem ersten Verfahrensschritt gemäß Fig. 1;
- Fig. 3: ein weiterer Verfahrensschritt des Ausführungsbeispiels zum Herstellungsverfahren; und
- Fig. 4: ein Interieurbauteil, das gemäß dem Ausführungsbeispiel des Herstellungsverfahrens hergestellt wurde.

### Wege zur Ausführung der Erfindung

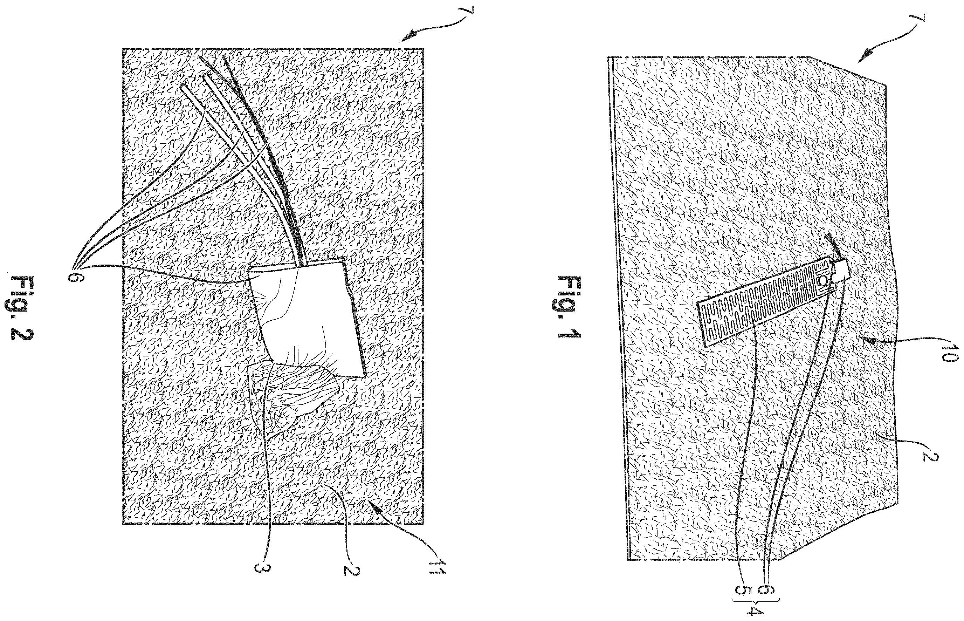

Fig. 1 zeigt einen ersten Verfahrensschritt eines Ausführungsbeispiels für ein Verfahren zur Herstellung eines Interieurbauteils 1. Bei dem ersten Verfahrensschritt wird ein Heizelement 4 mit einer Fasermatte 2 verbunden, um eine Verbundmatte 7 zu erzeugen.

Hierfür wird das Heizelement 4 auf die Fasermatte 2 aufgelegt. Das Heizelement 4 wird insbesondere auf eine erste Oberfläche 10 der Fasermatte 2 aufgelegt. Die erste Oberfläche 10 ist eine dem Fahrzeuginnensassen zugewandte Oberfläche 10, wenn das fertige Interieurbauteil 1 (in Fig. 1 nicht dargestellt) in einem Fahrzeug verbaut ist. Insofern kann die erste Oberfläche 10 auch als Vorderseite 10 der Fasermatte 2 bezeichnet werden.

Das Heizelement 4 kann optional vor dem Auflegen auf die Fasermatte 2 mit einer Klebeschicht und/oder beidseitig klebenden Klebeband versehen werden, damit das Heizelement 4 nach dem Auflegen an der gewünschten Position mit der Fasermatte 2 fixiert ist. Das Heizelement 4 weist im dargestellten Ausführungsbeispiel eine Heizlitze 5 auf. Die Heizlitze 5 ist dazu ausgebildet, sich zu erwärmen, wenn die Heizlitze 5 mit elektrischem Strom versorgt wird. Bei alternativen Ausführungsbeispielen kann das Heizelement 4 auch mehrere Heizlitzen 5 aufweisen. Die Heizlitze 5 ist mit einem Leiterelement 6 verbunden. Über das Leiterelement 6 kann das Heizelement 4, insbesondere die Heizlitze 5, gesteuert und/oder mit elektrischen Strom versorgt werden.

Die Fasermatte 2 umfasst in dem in Fig. 1 dargestellten Ausführungsbeispiel ausschließlich Naturfasern. Alternativ oder zusätzlich kann die Fasermatte 2 Polyester, Glasfasern, Biopolymerfasern und/oder Polymerfasern aufweisen.

Nachdem die Fasermatte 2 mit dem Heizelement 4 verbunden wurde, bilden die Fasermatte 2 und das Heizelement 4 gemeinsam eine Verbundmatte 7. Die erste Oberfläche 10 der Fasermatte 2 ist gleichzeitig auch die erste Oberfläche 10 der Verbundmatte 7.

Fig. 2 zeigt eine zweite Oberfläche 11 der Verbundmatte 7, insbesondere eine zweite Oberfläche 11 der Fasermatte 2. Die zweite Oberfläche 11 ist eine der ersten Oberfläche 10 gegenüberliegende Oberfläche. Die zweite Oberfläche 11 ist eine von dem Fahrzeuginnensassen abgewandte Oberfläche, wenn das fertige Interieurbauteil 1 (in Fig. 2 nicht dargestellt) in einem Fahrzeug verbaut ist. Insofern kann die zweite Oberfläche 11 auch als Rückseite der Verbundmatte 7 bzw. der Fasermatte 2 bezeichnet werden.

Nachdem das Heizelement 4 auf die Fasermatte 2 aufgelegt wurde, wurde in der Fasermatte 2 ein Durchgang 3 erzeugt. Der Durchgang 3 kann durch abschnittsweises Einschneiden der Fasermatte 2 und/oder durch Ausstanzen der Fasermatte 2 erzeugt werden. Bei alternativen Ausführungsbeispielen des Herstellungsverfahrens kann die Fasermatte 2 auch vor und/oder während des Auflegens mit dem Durchgang 3 versehen werden. Davon unabhängig kann die Fasermatte 2 auch schon mit dem Durchgang 3 bereitgestellt werden.

Wie in Fig. 2 dargestellt, wurde das Leiterelement 6 nach dem Auflegen des Heizelements 4 auf die Fasermatte 2 durch den Durchgang 3 hindurchgeführt. Das Leiterelement 6 ragt aus der zweiten Oberfläche 11 der Fasermatte 2 heraus. Dadurch bleibt das Leiterelement 6 auf der Rückseite der Fasermatte 2 frei zugänglich, insbesondere elektrisch kontaktierbar.

In einem weiteren Verfahrensschritt wird die Verbundmatte 7 vorkomprimiert. Das Vorkomprimieren der Verbundmatte 7 wird nach dem Verbinden der Fasermatte 2 mit dem Heizelement 4 durchgeführt und ist in den Figuren nicht dargestellt. Beim Vorkomprimieren wird die Verbundmatte 7 unter Aufbringen von Druck und Temperatur für eine bestimmte Zeit zusammengepresst, so dass sich die Dichte der Verbundmatte 7, insbesondere der Fasermatte 2, erhöht und/oder die Dicke der Verbundmatte 7 reduziert wird. Bei dem hier beschriebenen Ausführungsbeispiel des Herstellungsverfahrens wird die Verbundmatte 7 in einer Kontaktheißpresse vorkomprimiert. Um eine vordefinierte Dicke zu erreichen, kann beim Vorkomprimieren die Temperatur, die Kompressionsdauer und/oder die Anpresskraft entsprechend variiert werden.

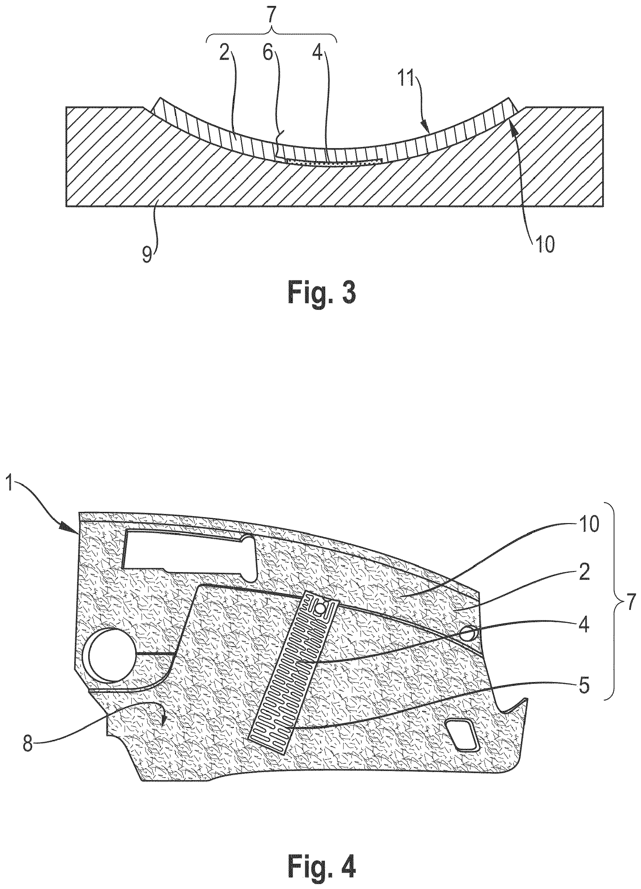

Fig. 3 zeigt eine Schnittdarstellung der vorkomprimierten Verbundmatte 7 in einem Umformwerkzeug 9. Das Umformwerkzeug 9 ist im dargestellten Ausführungsbeispiel eine Presse 9, wobei die Fig. 3 zum besseren Verständnis nur die untere Hälfte der Presse 9 zeigt.

Das die Verbundmatte 7 vorkomprimiert wurde, ist daran zu erkennen, dass das Heizelement 4 bereits in die Fasermatte 2 eingedrückt ist. Darüber hinaus wurde der Durchgang 3 durch das Vorkomprimieren eliminiert bzw. verschlossen. Die Fasermatte 2 schmiegt sich wir in Fig. 3 gezeigt im Bereich des ehemaligen Durchgangs 3 an das Leiterelement an. Bei alternativen Ausführungsbeispielen kann das Verschließen des Durchgangs ausschließlich oder zusätzlich während des Umformens erfolgen.

Wenn die Verbundmatte 7, wie in Fig. 3 gezeigt, in dem Umformwerkzeug 9 angeordnet ist und eine Druckkraft, vorzugsweise eine flächige Druckkraft, von oben auf die Verbundmatte 7 aufgebracht wird, wird die Verbundmatte 7 umgeformt. Beim Verfahrensschritt des Umformens erhält die Verbundmatte 7 die finale Form. Das Umformwerkzeug 9 weist die Negativform des Interieurbauteils 1 auf. Beim Umformen wird die Verbundmatte 7 daher in die Form des Interieurbauteils 1 gepresst. Das Umformen erfolgt durch Aufbringen einer vordefinierten Anpresskraft. Durch Einstellung der Temperatur, der Pressdauer, dem Werkzeugspalt und/oder der Druckkraft kann das Umformen derart gesteuert werden, dass die Verbundmatte 7 nach dem Umformen die vordefinierte Form des Interieurbauteils 1 und eine vordefinierte Dicke aufweist. Die Dicke des Interieurbauteils 1 ist nach dem Umformen geringer als die Dicke der Verbundmatte 7 nach dem Vorkomprimieren. Zusätzlich oder alternativ kann die Verbundmatte 7 während des Umformens zugeschnitten werden. Durch das Zuschneiden können die Außenabmaße der Verbundmatte 7 an die vordefinierten Außenabmaße des Interieurbauteils 1 angepasst werden. Davon unabhängig können während des Zuschneidens auch Teilabschnitte aus der Verbundmatte 7 ausgestanzt werden.

Fig. 4 zeigt ein fertiges Interieurbauteil 1, das gemäß den oben beschriebenen Verfahrensschritten erzeugt wurde. Um das Interieurbauteil 1 fertig zu stellen, wurde eine Dekorschicht 8 auf die erste Oberfläche 10 aufgebracht. Bei der Dekorschicht 8 handelt es sich im dargestellten Ausführungsbeispiel um eine Klarlackschicht, die ausschließlich auf die ersten Oberfläche 10 aufgespritzt wurde. Dadurch bleibt die kennzeichnende Optik der Fasermatte 2, insbesondere der Naturfasermatte 2, für einen Fahrzeuginsassen sichtbar, wenn das Interieurbauteil 1 in einem Fahrzeug verbaut wird. Bei alternativen Ausführungsbeispielen kann die Dekorschicht Leder, Kunstleder, Alcantara, Textil und/oder eine Planware mit thermoplastischen Polyolefinen aufweisen. Das Aufbringen der Dekorschicht 8 kann während des Umformens und/oder im nach dem Umformen realisiert werden.

Das Leiterelement 6 ragt bei dem fertigen Interieurbauteil 1 zumindest abschnittsweise aus der zweiten Oberfläche 11 heraus (in den Figuren nicht gezeigt). Dadurch bleibt das Leiterelement 6 auch nach dem Aufbringen der Dekorschicht 8 zumindest abschnittsweise frei zugänglich. Dies hat zur Folge, dass das Leiterelement 6 mit der Fahrzeugelektronik kontaktiert werden kann, wenn das Interieurbauteil 1 in einem Fahrzeug verbaut wird.

### BEZUGSZEICHENLISTE

- 1: Interieurbauteil
- 2: Fasermatte
- 3: Durchgang
- 4: Heizelement
- 5: Heizlitze / Heizschleife
- 6: Leiterelement
- 7: Verbundmatte
- 8: Dekorschicht / Klarlack
- 9: Umformwerkzeug
- 10: erste Oberfläche / Vorderseite
- 11: zweite Oberfläche / Rückseite

## Patentansprüche

1. Verfahren zur Herstellung eines Interieurbauteils (1) für ein Fahrzeug mit folgenden Verfahrensschritten:
a) Bereitstellen einer Fasermatte (2) und Einbringen eines Durchgangs (3) in die Fasermatte (2),
b) Erzeugen einer Verbundmatte (7) durch Aufbringen eines Heizelements (4) auf eine erste Oberfläche (10) der Fasermatte (2), wobei ein elektrisches Leiterelement (6) des Heizelements (4) durch den Durchgang (3) hindurchgeführt wird, und
c) Umformen der Verbundmatte (7), um ein Interieurbauteil zu erzeugen.

2. Verfahren nach Anspruch 1, **dadurch gekennzeichnet, dass** das Leiterelement (6) derart durch den Durchgang (3) hindurchgeführt wird, dass das Leiterelement (6) zumindest abschnittsweise aus einer der ersten Oberfläche (10) gegenüberliegenden zweiten Oberfläche (11) der Fasermatte (2) herausragt.

3. Verfahren nach Anspruch 2, **dadurch gekennzeichnet, dass** vor, während und/oder nach dem Umformen der Verbundmatte (7) ein Stecker an das aus der zweiten Oberfläche (11) zumindest abschnittsweise herausragende Leiterelement (6) angeformt wird.

4. Verfahren nach einem der Ansprüche 2 oder 3, **dadurch gekennzeichnet, dass** die Verbundmatte (7) beim Umformen in ein Umformwerkzeug (9) eingebracht wird und unter Aufbringen einer Druckkraft zusammengepresst wird, wobei der aus der zweiten Oberfläche (11) der Fasermatte (2) herausragende Teil des Leiterelements (6) nach dem Umformen elektrisch kontaktierbar bleibt.

5. Verfahren nach einem der vorhergehenden Ansprüche, **dadurch gekennzeichnet, dass** der Durchgang (3) beim Umformen derart verschlossen wird, dass sich die Fasermatte (2) im Bereich des Durchgangs (3) an das Leiterelement (6) anschmiegt.

6. Verfahren nach einem der vorhergehenden Ansprüche, **dadurch gekennzeichnet, dass** die Verbundmatte (7) durch das Umformen komprimiert und verfestigt wird, und/oder eine Dekorschicht (8) auf die erste Oberfläche (10) aufgebracht wird.

7. Verfahren nach einem der vorhergehenden Ansprüche, **dadurch gekennzeichnet, dass** die Fasermatte (2) Naturfasern, Polyester, Glasfasern, Biopolymerfaser und/oder Polymerfasern aufweist.

8. Verfahren nach einem der vorhergehenden Ansprüche, **dadurch gekennzeichnet, dass** die Verbundmatte (7) vor dem Umformen vorkomprimiert wird, um die Verbundmatte (7) auf eine vordefinierte Dicke zu komprimieren.

9. Verfahren nach einem der vorhergehenden Ansprüche, **dadurch gekennzeichnet, dass** die Verbundmatte (7) nach dem Umformen mit Kunststoff hinterspritzt wird, wobei das Leiterelement (6) nach dem Hinterspritzen elektrisch kontaktierbar bleibt.

10. Verfahren nach einem der vorhergehenden Ansprüche, **dadurch gekennzeichnet, dass** vor dem Umformen eine weitere Fasermatte auf die Verbundmatte (7) aufgebracht wird, wobei die weitere Fasermatte so auf die Verbundmatte (7) aufgebracht wird, dass das Heizelement (4) zumindest abschnittsweise zwischen der weiteren Fasermatte und der Fasermatte (2) der Verbundmatte (7) angeordnet ist.
